(19) **Europäisches Patentamt**

**European Patent Office**

**Office européen des brevets**

(11) **EP 1 104 372 B1**

(12) **EUROPÄISCHE PATENTSCHRIFT**

(45) Veröffentlichungstag und Bekanntmachung des Hinweises auf die Patenterteilung:
**11.06.2003 Patentblatt 2003/24**

(21) Anmeldenummer: **99942930.1**

(22) Anmeldetag: **09.08.1999**

(51) Int Cl.⁷: **B60T 8/00**

(86) Internationale Anmeldenummer:
**PCT/EP99/06350**

(87) Internationale Veröffentlichungsnummer:
**WO 00/009376 (24.02.2000 Gazette 2000/08)**

(54) **ESP-REGLER FÜR KRAFTFAHRZEUGE**

ESP REGULATOR FOR MOTOR VEHICLES

REGULATEUR ESP POUR VEHICULES A MOTEUR

(84) Benannte Vertragsstaaten:
**DE FR IT**

(30) Priorität: **10.08.1998 DE 19836025**

(43) Veröffentlichungstag der Anmeldung:
**06.06.2001 Patentblatt 2001/23**

(73) Patentinhaber:
• **Continental Teves AG & Co. oHG
60488 Frankfurt (DE)**
• **Latarnik, Christine (Erbin des verstorben Erfinders)
Friedrichsdorf (DE)**

(72) Erfinder: **LATARNIK, Michael DI
(DE)**

(56) Entgegenhaltungen:
**DE-A- 4 305 155**

• **ZANTEN VAN A T ET AL: "DIE FAHRDYNAMIKREGELUNG VON BOSCH" AUTOMATISIERUNGSTECHNIK - AT,DE,OLDENBOURG VERLAG. MUNCHEN, Bd. 44, Nr. 7, Seite 359-365 XP000592696 ISSN: 0178-2312**
• **FENNEL H: "ABS PLUS UND ESP" ATZ AUTOMOBILTECHNISCHE ZEITSCHRIFT,DE,FRANCKH'SCHE VERLAGSHANDLUNG. STUTTGART, Bd. 100, Nr. 4, Seite 302-308 XP000750977 ISSN: 0001-2785**
• **DEBES M ET AL: "DYNAMISCHE STABILITAETS CONTROL DSC DER BAUREIHE 7 VON BMV - TEIL 1" ATZ AUTOMOBILTECHNISCHE ZEITSCHRIFT,DE,FRANCKH'SCHE VERLAGSHANDLUNG. STUTTGART, Bd. 99, Nr. 3, Seite 134-136,138-14 XP000682345 ISSN: 0001-2785**

**Beschreibung**

Die Erfindung betrifft einen ESP-Regler für Kraftfahrzeuge, mit hierarchisch organisierten Basisfunktionen, die mindestens einen Fahrzeugdynamikregler (GMR) und ein Antiblockiersystem (ABS oder ABSplus) umfassen und der weitere Basisfunktionen oder Systeme, wie ASR, MSR, EBV, ICC, BA etc., aufweisen kann, wobei der Fahrzeugdynamikregler (GMR-Regler) den übrigen Basisfunktionen oder Systemen übergeordnet ist und ein zusätzliches Giermoment ($\Delta$ M) berechnet.

Systeme zur Regelung der Fahrdynamik, sog. ESP-Systeme oder ESP-Regler, von Kraftfahrzeugen sind aus dem Stand der Technik in vielerlei Modifikationen bekannt. Hierbei werden im allgemeinen aus Meß- und Schätzgrößen Soll-Größen bestimmt, deren Einregelung mit Hilfe von individuell einstellbaren Bremsmomenten an den Radbremsen zur Stabilisierung des Fahrverhaltens beitragen. Das ESP-System benutzt dabei ABS, $ABS_{plus}$ und ASR etc. Basisfunktionen und bedient sich zusätzlich weiterer Aktuatorik und Sensorik. Hierbei werden im allgemeinen als Meßgrößen die Radgeschwindigkeiten der Räder, die Giergeschwindigkeit, die Querbeschleunigung und der Lenkwinkel des Fahrzeugs verwendet.

Aus der DE 44 46 592 A1 ist ein modulares Fahrdynamikregelsystem bekannt, das aufwärts kompatibel zu vorhandenen Serienreglern ist. Man erhält so eine hierarchisch strukturierte Fahrdynamikregelung mit einem übergeordneten GMR-Regler für die Fahrzeugbewegung und unterlagerten Reglern für die Fahrzeugbremse (Antiblockiersystem) bzw. für den Antriebsstrang (Antriebsschlupfregelung, Getriebesteuerung). Dabei sind das unterlagerte Antiblokiersystem (Regelung des Radschlupfs bzw. der Radverzögerung) oder weitere Basisfunktionen als sog. "stand alone"-Serienregler ausgebildet, die zusätzlich mit einer Schnittstelle zum überlagerten GMR-Regler versehen sind. Dies hat den Vorteil, dass die unterlagerten Regler nicht extra entwickelt und appliziert werden müssen. Insbesondere ist eine Mehrfachnutzung von Systemkomponenten für verschiedene Regelungssysteme möglich.

Ein Modul ist im allgemeinen Sprachgebrauch ein integrierter Bestandteil eines Gesamtsystems mit einer weitgehend eigenständigen Funktion.

Der Begriff "modulares Fahrdynamikreglersystem" umfaßt demgemäß ein System, in dem diverse funktionale Software-Basisfunktionen (ABS, $ABS_{plus}$, EBV, GMR etc.) zwar zu einer Einheit zusammengefaßt sind und in einem gemeinsamen elektronischen Regler zur Auswirkung kommen, jedoch über geeignete Schnittstellen so voneinander entkoppelt sind, dass sie weitgehend autonom lokale Ziele verfolgen können.

Ziel des Antiblockiersystems ist es, einen minimalen Bremsweg bei akzeptabler Lenkbarkeit und Stabilität des Fahrzeugs zu erreichen, während die Antriebsschlupfregelung (ASR) eine maximale Traktion bei akzeptabler Lenkbarkeit und Stabilität anstrebt.

Über eine einfache Bestimmung der Prioritäten , z,B. in Form ABS vor ASR etc., wird der Zugriff auf die Aktuatorik festgelegt.

Die untergeordneten Basisfunktionen oder Systeme müssen dabei die lokalen Ziele und diese einfachen Prioritätsentscheidungen auch mit teilweise fehlenden Sensorinformationen ausführen, so daß die Standardfunktionalität gewährleistet ist.

Der übergeordnete GMR-Regler übernimmt dabei die Bewertung der von den untergeordneten Basisfunktionen ermittelten Größen nach deren Prioritätsentscheidungen für lokale Ziele und entscheidet.

Bei einem aus ATZ Automobile Technische Zeitschrift 96 (1994) 11 Seiten 674 - 688 bekanntem Fahrdynamikregler, dem ESP-Regler, werden durch Sollschlupfänderungen, die von den unterlagerten Brems- und Antriebsschlupfreglern eingestellt werden müssen, Längskräfte und damit auch indirekt die Seitenkräfte an einem Rad so geändert, dass ein zusatzgiermoment dem Kraftfahrzeug aufgeprägt wird, welches über eine Drehung um die Hochachse des Kraftfahrzeugs einem "übersteuernden" oder "unter steuernden" Fahrverhalten entgegenwirkt. Wenn jedoch der Haftreibwert niedriger ist als der wert der Querbeschleunigung entlang der stationären Sollspur, dann ist dieser Soll-Wert zu groß und muß von einer Schwimmwinkelregelung auf einen Wert reduziert werden, der dem physikalisch noch fahrbaren Spurverlauf entspricht.

Der Fahrdynamikregler regelt die beiden Zustandsgrößen Giergeschwindigkeit und Schwimmwinkel und berechnet das Giermoment, das benötigt wird, um die Ist-Zustandsgrößen den Soll-Zustandsgrößen anzugleichen.

Dies führt zu einem noch physikalisch fahrbaren Spurverlauf, der von der Fahrspur erheblich abweichen kann, weil die Geschwindigkeit des Kraftfahrzeugs in Längs- und Querrichtung für den aktuellen Haftreibwert zu hoch ist.

Darüber hinaus ist aus der DE 43 05 155 A ein übergeordneter Fahrdynamikrechner, aus Automatisierungstechnik - AT, DE, Oldenburg Bd.44 Nr.7, Seiten 359-365 eine Fahrdynamikregelung von Bosch, aus ATZ, DE, Bd. 100, Nr.4 Seiten 302-308 eine Fahrzeugdynamik-Regelung und aus ATZ, DE, Bd. 99, Nr. 3, Seiten 134-140 eine dynamische Stabilitätskontrolle der Baureihe 7 von BMW bekannt.

Der Erfindung liegt die Aufgabe zugrunde, einen ESP-Regler für Kraftfahrzeuge zu schaffen, der durch flexible Koordination der Basismodulaufgaben eine verbesserte Fahrdynamikregelung ermöglicht.

Diese Aufgabe wird erfindungsgemäß durch die Merkmale des Anspruchs 1 gelöst.

Vorteilhafte Weiterbildungen der Erfindung sind in den Unteransprüchen angegeben.

Der Grundgedanke der Erfindung ist also darin zu sehen, dass neben der Berechnung des Giermomemts durch Berechnung der zusätzlichen resultierenden Längs- und/oder Seitenkräfte oder der radindividuellen Längs- und/ oder Seitenkräfte im Fahrzeugdynamikregler, diese Größen als Korrekturwerte für die von den untergeordneten Basisfunktionen oder Systemen errechneten oder erzeugten Seiten- und/oder Längskräfte ausgewertet bzw. bestimmt werden. Diese Kräfte und das Giermoment werden vorzugsweise additiv zu dem schon vom $ABS_{plus}$ und anderen untergeordneten Basisfunktionen wie EBV, MSR, ASR erzeugten Giermoment, den Seiten- und den Längskräften zugeordnet. Durch die Bereitstellung der zusätzlichen Längs- und/oder Seitenkräfte durch den Fahrzeugdynamikregler ist eine zusätzliche Stabilisierung des Fahrzeugverhaltens während einer ESP-Regelung bei einer Kurvenfahrt des Kraftfahrzeugs möglich. Denn neben der selektiven Ansteuerung der Radbremsen der Räder zum Erzeugen eines Zusatzdrehmoments um die Hochachse des Fahrzeugs entgegengesetzt zum detektierten "übersteuernden" oder "untersteuernden" Fahrverhalten des Fahrzeugs ist eine Geschwindigkeitsregelung über die zusätzlichen resultierenden Längs- und Seitenkräfte möglich. Die Verbesserung der Systemmodularität wird folglich dadurch erreicht, indem der ESP-Regler die Vorgaben Giermoment, resultierende Längs- und/oder Seitenkräfte an die unterlagerten Basisfunktionen oder Systeme weiterleitet. In diesen werden die Sollgrößen mit den eigenen superponiert und die Aktuatoren entsprechend betätigt.

Gemäß einer Ausbildung berechnet der Fahrzeugdynamikregler das zusätzliche Giermoment und/oder die zusätzlichen Längs- und/oder Seitenkräfte auf Basis der Giergeschwindigkeitsabweichung von der für die aktuelle Fahrsituation vordefinierten Soll-Gierwinkelgeschwindigkeit und der Abweichung des geschätzten Fahrzeugschwimmwinkels und verwendet die Größen für die Bestimmumg der Sollwerte $M_{Soll}$, $F_{L,Soll}$ und $F_{S,Soll}$ nach

$$\begin{bmatrix} F_{L,Soll} \\ F_{S,Soll} \\ M_{Soll} \end{bmatrix} = \begin{bmatrix} F_{L/Soll,Basis} \\ F_{S/Soll,Basis} \\ M_{Soll,Basis} \end{bmatrix} + \begin{bmatrix} \Delta F_L \\ \Delta F_S \\ \Delta M \end{bmatrix}$$

,wobei $M_{Soll}$, $F_{L,Soll}$ und $F_{S,Soll}$ die Sollwerte für die Fahrzeugaktuatoren darstellen. Die Fahrzeugaktuatoren können als Druckregler, Kraftregler und/oder Motormomentregler ausgebildet sein. Die vorgeschlagene Schnittstelle ($\Delta M$, $\Delta F_L$, $\Delta F_S$) basiert auf universellen physikalischen Größen. Dadurch ist die Anwendung der hierarchischen Struktur nach der Erfindung für ein sehr breites Spektrum von Sensoren (Kräftemessung im oder am Reifen oder der Radaufhängung, radindividuelle Druckmessung,etc.) und Aktuatoren ( Radkräfteregelung, Momentenregelung, etc.) sehr vereinfacht und von einer Basisfunktion oder System auf ein anderes ohne Aufwand übertragbar.

Eine weitere Ausbildung der Erfindung sieht vor, dass der Fahrzeugdynamikregler das zusätzliche Giermoment und/oder die zusätzlichen Längs- und/oder Seitenkräfte nach der Beziehung

$$\begin{bmatrix} \Delta F_L \\ \Delta F_S \\ \Delta M \end{bmatrix} = f \left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}$$

mit

$\beta_{soll}$ = Soll-Schwimmwinkel
$\beta_{ist}$ = Ist-Schwimmwinkel
$\dot{\psi}_{soll}$ = Soll-Gierwinkelgeschwindigkeit
$\dot{\psi}_{ist}$ = Ist-Gierwinkelgeschwindigkeit
$a$ = Querbeschleunigung
$\lambda$ = Schlupfwerte $\{\lambda = [\lambda_{VL}, \lambda_{VR}, \lambda_{HL}, \lambda_{HR}]\}$
$v_x$ = Fahrzeug-Längsgeschwindigkeit
$v_y$ = Fahrzeug-Quergeschwindigkeit
$\mu$ = Reibwert $\{\mu = [\mu_{VL}, \mu_{VR}, \mu_{HL}, \mu_{HR}]\}$
$\alpha$ = Schräglaufwinkel $\{\alpha = [\alpha_{VL}, \alpha_{VR}, \alpha_{HL}, \alpha_{HR}]\}$

$F_{L/Ist}$ = berechnete oder gemessene Ist-Reifenlängskräfte {$F_L$ = [ $F_{L,VL}$ , $F_{L,VR}$ , $F_{L,HL}$ , $F_{L,HR}$ ]}

$F_{S/Ist}$ = berechnete oder gemessene Ist-Reifenseitenkräfte {$F_S$ = [ $F_{S,VL}$ , $F_{S,VR}$ , $F_{S,HL}$ , $F_{S,HR}$ ]}

$F_{L/Soll,Basis}$ = vom Basiskoordinator (ABS oder ABSplus-Regler) berechnete Soll-Reifenlängskräfte

$F_{S/Soll,Basis}$ = vom Basiskoordinator (ABS oder ABSplus-Regler) berechnete Soll-Seitenkräfte

$M_{Soll,Basis}$ = vom Basiskoordinator (ABS oder ABSplus-Regler)berechnetes Soll-Giermoment

berechnet und für die Bestimmung der Sollwerte verwendet. Die vorgeschlagene Aufteilung der Aufgaben und Schnittstellen zwischen dem GMR-Regler als übergeordnete Basisfunktion oder System und anderen Basisfunktionen ermöglicht eine einfache Einführung einer Vor-oder Pre-ESP-Regelung. Dieser Pre-ESP Eingriff wirkt vorbeugend und vereinfacht oder verhindert den konventionellen ESP-Eingriff. Dadurch kann die Sicherheit und der Komfort in einer hoch dynamischen Fahrsituation verbessert werden.

Nach einer weiteren Ausbildung weist der ESP-Regler als untergeordnete Basisfunktion oder System zumindestens ein ABS oder ABS$_{plus}$ und ein ASR auf. Dabei wird in den untergeordneten Systemen eine Bremsdruckregelung vorrangig von dem ABS oder ABS$_{plus}$ bestimmt und erforderlichenfalls von dem ASR und/oder von anderen untergeordneten Systemen korrigiert. Diese Bestimmung der Bremsdruckregelung in der untergeordneten Basisfunktion oder System durch das ABS oder ABS$_{plus}$ gewährleistet eine sehr einfache Koordination für den Bremseneingriff, weil das ABS-Modul die umfangreichsten Informationen über die Radzustände und Raddrücke sowie -kräfte ermittelt und anwendet. Diese Koordination ist dann an einem Modul gebunden, das nahezu in jedem Fahrzeug mit Bremseneingriff vorhanden ist.

Ein Eingriff in die Antriebsmotorsteuerung wird in dem ESP-Regler vorrangig von dem ASR bestimmt und erforderlichenfalls von dem ABS oder ABS$_{plus}$ und/oder von den anderen untergeordneten Funktionen bzw. Systemen berücksichtigt. Dadurch wird eine sehr einfache Koordination für Eingriffe in den Motor oder die Gangübersetzung erreicht, weil das ARS Modul die umfangreichsten Informationen über das Motormoment und/oder die Gangübersetzung ermittelt und anwendet. Diese vereinfachte Koordination ist dann an einem Modul gebunden, der ebenfalls in vielen Fahrzeugen vorhanden ist.

Der ESP-Regler ist über eine ESP-Signalaufbereitung (Sensorsignalvorbereitung und Signalgüteerkennung) mit einer Vielzahl Sensoren, wie Lenkwinkelsensor, Bremsdrucksensor, Motormomentsensor, Gangschaltungssensor, Querbeschleunigungssensor, Giergeschwindigkeitssensor, Radgeschwindigkeitssensoren verbunden, deren Sensorsignale vorverarbeitet und dann dem ESP-Regler zur Verfügung gestellt werden. Die Sensor-Signale enthalten Informationen über den Zustand des Fahrzeugs und werden mittels einer Intermodul-Kommunikation an Signalaufbereitungen von ABS/EBV und ASR/MSR weitergeleitet. Diese Signale werden dort genutzt, um bereits vorhandene abgeleitete Signal zu ergänzen oder in ihrer Genauigkeit zu erhöhen. Im Falle einer fehlerhaften ESP-Sensorik wird eine Sensorersatzsignalberechnung auf der Basis der konventionellen ABS-Sensoren realisiert und dadurch die ABS$_{plus}$- bzw. ABS oder EBV-Standardfunktion gewährleistet. Der ESP-Regler weist hierzu eine Vorrichtung zum Ersetzen eines fehlerhaften Sensorsignals auf, Mittel zum Überprüfen eines Sensorsignals auf Richtigkeit, Mittel zum Erkennen eines fehlerhaften Sensorsignals, Mittel zum Bilden eines Ersatzsignals aus dem Ausgangssignal eines oder mehrerer anderer Sensoren und Umschaltmittel zum Verbinden der Vorrichtung mit den Basisfunktionen oder Systemen. Dadurch, dass über die Umschaltmittel die Basisfunktionen oder Systeme mit der Vorrichtung verbunden werden können, ist bei Fehlern in der Standardsensorik einer Basisfunktion immer die Funktion der untergeordneten Basisfunktion oder des Systems gewährleistet. Bei Fehlern in der ABS-Standardsensorik kann eine Notlauf-EBV-Funktion aktiviert werden.

Mit dem ESP-Regler wird eine Fahrdynamikregelung eines Fahrzeugs auf der Basis der zusätzlichen resultierenden oder radindividuellen Längs- und/oder Seitenkräfte und/oder des Giermoments nach der Beziehung

$$\begin{bmatrix} \Delta F_L \\ \Delta F_S \\ \Delta M \end{bmatrix} = f\left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}$$

mit

$\beta_{soll}$ = Soll-Schwimmwinkel

$\beta_{ist}$ = Ist-Schwimmwinkel

$\dot{\psi}_{soll}$ = Soll-Gierwinkelgeschwindigkeit

$\dot{\psi}_{ist}$ = Ist-Gierwinkelgeschwindigkeit

$a$ = Querbeschleunigung

$\lambda$ = Schlupfwerte {$\lambda$ = [ $\lambda_{VL}$ , $\lambda_{VR}$ , $\lambda_{HL}$ , $\lambda_{HR}$ ]}

$v_x$ = Fahrzeug-Längsgeschwindigkeit

$v_y$ = Fahrzeug-Quergeschwindigkeit

$\mu$ = Reibwert { $\mu$ = [ $\mu_{VL}$ , $\mu_{VR}$ , $\mu_{HL}$ , $\mu_{HR}$ ]}

$\alpha$ = Schräglaufwinkel { $\alpha$ = [ $\alpha_{VL}$ , $\alpha_{VR}$ , $\alpha_{HL}$ , $\alpha_{HR}$ ]}

$F_{L/Ist}$ = berechnete oder gemessene Ist-Reifenlängskräfte {$F_L$ = [ $F_{L,VL}$ , $F_{L,VR}$ , $F_{L,HL}$ , $F_{L,HR}$ ]}

$F_{S/Ist}$ = berechnete oder gemessene Ist-Reifenseitenkräfte {$F_S$ = [ $F_{S,VL}$ , $F_{S,VR}$ , $F_{S,HL}$ , $F_{S,HR}$ ]}

$F_{L/Soll,Basis}$ = vom Basiskoordinator (ABS oder ABSplus-Regler) berechnete Soll-Reifenlängskräfte

$F_{S/Soll,Basis}$ = vom Basiskoordinator (ABS oder ABSplus-Regler) berechnete Soll-Seitenkräfte

$M_{Soll,Basis}$ = vom Basiskoordinator (ABS oder ABSplus-Regler) berechnetes Soll-Giermoment

berechnet und mit Hilfe dieser berechneten Längs- und/oder Seitenkräfte und/oder des Giermoments eine die Geschwindigkeit in Längs- und/oder Querrichtung des Kraftfahrzeugs beeinflussende Längs- bzw. Seitenkraft und/oder ein zusätzliches Giermoment $\Delta M$ für die Einstellung der Fahrzeugaktuatoren bestimmt.

Vorteilhaft wird anhand einer Bewertung der zusätzlichen Längs- und/oder Seitenkräfte während einer Kurvenfahrt eine Veränderung der Längskraft auf der Basis des für die aktuelle Fahrsituation vordefinierten Reibwertes und der Beurteilung der aktuellen Geschwindigkeit in Längsund/oder Querrichtung unter Berücksichtigung der Eingaben des Fahrers über die Fahrzeugaktuatoren vorgenommen. Durch die Bewertung der Längs- und/oder Seitenkräfte ist eine Bremsregelung während der Kurvenfahrt möglich, mittels der die Querdynamik des Fahrzeugs begrenzt werden kann, so dass eine kritische Fahrsituation bereits im Vorfeld vermieden wird. Der ESP-Regler tritt nicht in die Regelung ein und berechnet kein zusätzliches Giermoment, da die Geschwindigkeit in Längs-und Querrichtung begrenzt ist.

Führt eine Veränderung der Längskraft nicht zur vollständigen Unterdrückung der Gierbewegung, regelt der ESP-Regler die Größen Giermoment, Schwimmwinkel und die Längskraft. Der physikalisch noch fahrbare Spurverlauf nähert sich dabei durch die Geschwindigkeitsreduzierung der Soll-Fahrspur an. Die Stabilität des Fahrzeugs erhöht sich.

Nach einer weiteren Ausbildung der Erfindung dienen das zusätzliche Giermoment und die zusätzliche Längskraft zur Festlegung von Druckgrößen und/oder des Motormoments, die über die Bremsdruckregelung ein Zusatzgiermoment und/oder eine Verringerung der Geschwindigkeit in Längsrichtung erzeugen, welche die Ist-Gierwinkelgeschwindigkeit zur Soll-Gierwinkelgeschwindigkeit und/oder die Ist-Längsgeschwindigkeit zur Soll-Längsgeschwindigkeit hinführt. Die Verringerung der Ist-Längsgeschwindigkeit erfolgt bevorzugt durch eine gemeinsame Bremsdruckregelung der Vorderbremsen.

Ein Ausführungsbeispiel der Erfindung ist in der Zeichnung dargestellt und wird im folgenden näher beschrieben.

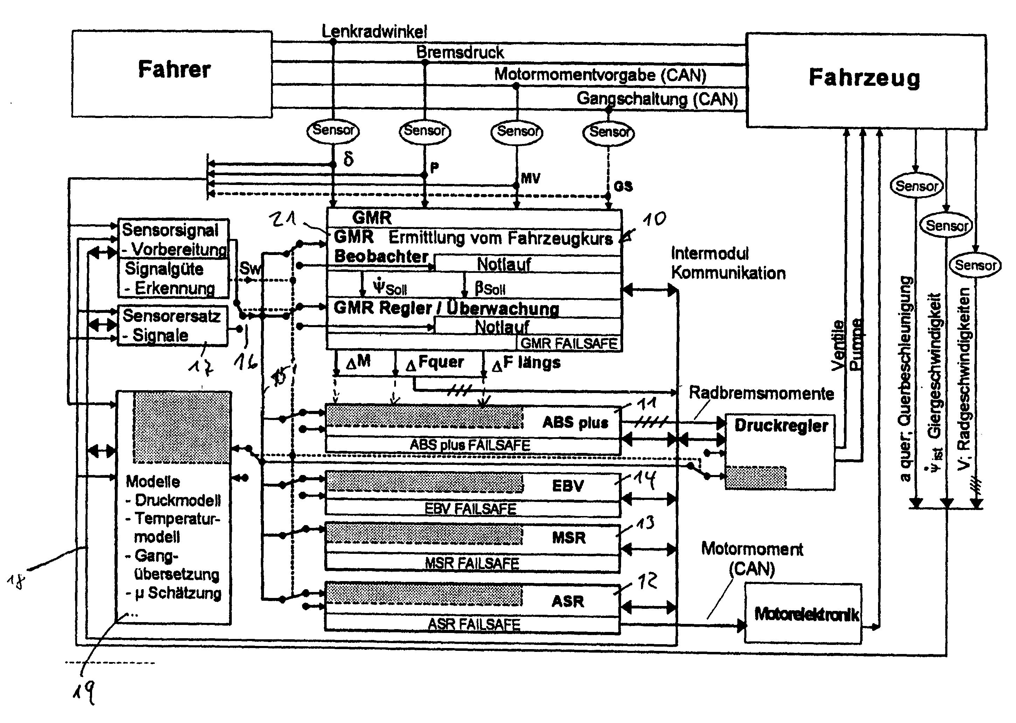

In der Fig. 1 ist ein modularer ESP-Regler dargestellt mit hierarchisch organisierten Basisfunktionen, die mindestens einen Fahrzeugdynamikregler 10 und ein Antiblockiersystem (ABS oder ABS$_{plus}$) 11 umfassen. Weitere Basisfunktionen oder -systeme wie ASR 12, MSR 13, EBV 14 oder ICC, BA können in dem ESP-Regler vorgesehen werden. Der Fahrzeugdynamikregler ist den übrigen Basisfunktionen oder Systemen übergeordnet. Als untergeordnete funktionale Basis arbeiten die Komponenten EBV und ABS$_{plus}$, die gegenüber dem konventionellen Antiblockiersystem mit zusätzlichen Stabilisierungsmechanismen für Teil- und Vollbremsungen im Kurvenbereich ausgestattet sind. Die Komponenten MSR und ASR sorgen im wesentlichen durch Beeinflussung des Motormoments für Fahrstabilität im Schlepp- und Traktionsbetrieb, wobei das ASR auch noch ein BASR beinhaltet, also zusätzlich einen gezielten individuellen Bremseneingriff an den Antriebsrädern durchführen kann, um die Fahrzeugtraktion auf inhomogenen Fahrbahnen zu erhöhen. Die wesentliche Komponente im ESP-Regler ist der GMR-Regler, der den Fahrer in allen kritischen Fahrsituationen unterstützt, indem Fahrstabilität und Lenkfähigkeit des Fahrzeugs im Kurvengrenzbereich durch eine exakte Radmomentenverteilung optimiert werden. Über eine Eingangsschnittstelle 15 werden die Eingangssignale der Sensoren eingelesen und den Basisfunktionen zugänglich gemacht. Während die Signale der vier Radgeschwindigkeitssensoren von allen Basisfunktionen verwendet werden, benötigt der GMR-Regler die Signale zusätzlicher Sensoren, um die Fahrdynamik des Fahrzeugs zu erfassen. Dem GMR-Regler werden die Signale des Querbeschleunigungs-Sensors, des Giergeschwindigkeits-Sensors, des Lenkradwinkel-Sensors, des Bremsdruck-Sensors und des Motormoments-Sensors und optional des Sensors, der ein Signal über den eingelegten Gang zur Verfügung stellt, über eine Signalaufbereitung zugeführt. In der Signalaufbereitung durchlaufen die Signale eine Sensorsignalvorbereitung und eine Signalgüteerkennung. Danach können die Signale in den verschiedenen Basisfunktionen oder Systemen verwendet werden. Im Rahmen der Signalaufbereitung und Signalgüteerkennung können die Signale gefiltert werden oder es können andere Signalanpassungen erfolgen.

Im Falle einer fehlerhaften ESP-Sensorik gelangen die Signale in eine Vorrichtung 17 zum Ersetzen des fehlerhaften Sensorsignals . Die Vorrichtung 17 weist eine Überprüfungseinrichtung zum Überprüfen des Signals des Sensors auf Richtigkeit und Erkennen des fehlerhaften Signals und eine Ermittlungseinrichtung zum Ermitteln eines Ersatzsignals aus dem Ausgangssignal eines oder mehrerer anderer Sensoren auf. Über die Umschalteinrichtung 16 wird auf die Erkennung eines fehlerhaften Sensorsignals hin das Ersatzsignal anstelle des fehlerhaften Sensorsignals den Basisfunktionen zugeführt, indem der Umschalter 16 die Vorrichtung 17 mit der Eingangsschnittstelle verbindet. Der ESP-Regler weist weiterhin einen Rechenmodul 19 auf, in dem mittels modellhafter Sensorik geschätzte z.B. Raddrücke für alle vier Räder des Fahrzeugs ermittelt werden. Entsprechende Modelle zur Temperaturschätzung oder für die Gangübersetzung oder den Reibwert μ können in dem Modul vorgesehen werden.

Die Basisfunktionen oder Systeme sind über die Intermodul-Kommunikation 18 miteinander verbunden und tauschen Informationen untereinander aus. Das bedeutet, dass eine Basisfunktion, die über spezielle Informationen des Fahrzustands verfügt, wie insbesondere der GMR-Regler, diese auch den untergeordneten Basisfunktionen oder Systemen zur Verfügung stellt. Auf diese Weise wird die Qualität der untergeordneten Basisfunktionen, beispielsweise des ABS$_{plus}$, erhöht, indem zum einen die Erkennung von Kurvenmanövern abgesichert wird, zum anderen bei sicher erkannter Geradeausbremsung auf Hochreibwert-Fahrbahnen ganz gezielt die Bremsleistung optimiert und damit die physikalischen Maximalwerte ausschöpft. Der modulare ESP-Regler bewirkt, dass bei Ausfall eines Sensors, der nur vom GMR-Regler zwingend benötigt wird, auch nur eine Abschaltung dieses GMR-Reglers erfolgt, während alle anderen Basisfunktionen weiterhin fehlerfrei arbeiten können. Für das ABS$_{plus}$ bedeutet dies, dass nach dem oben genannten Beispiel die Kurvenerkennung nicht mehr durch die ESP-Sensoren gestützt, sondern in konventioneller Weise durch die Berechnung geeigneter Hilfssignale der modellhaften Sensorik fortgesetzt wird. Dazu benutzt das ABS nur noch die Radgeschwindigkeitssensoren und ermittelt die Kurvenfahrt anhand von Geometrieschlupf und bestimmten Radgeschwindigkeitsmustern. Dieser Algorithmus wird auch im fehlerfreien Betrieb durchlaufen. Die ESP-Sensorsignale sorgen zusätzlich für eine schnellere, eindeutigere Erkennung. Auf der Rückfallebene arbeitet das ABS also mit einer Leistung, die einer ABS-Funktion ohne übergeordneten GMR-Regler entspricht. Auf diese Weise wird eine maximale Restfunktionalität sichergestellt.

Jede Basisfunktion oder System verfügt dazu weiterhin über ein eigenes Failsafe-Modul, um ebenfalls unabhängig von anderen Komponenten und deren Status eine ständige Selbstüberprüfung durchführen zu können. Über die Ausgangsschnittstelle erfolgt die Ansteuerung der Fahrzeugaktuatoren sowie des Fahrzeug-Datenbus-Systems. Damit in einem Zeitpunkt immer nur eine Basisfunktion direkten Zugriff zu den Ressourcen hat, erfolgt entweder über die Intermodul-Kommunikation auch eine Koordination der Basisfunktionen oder Systeme oder das Antiblockiersystem, nämlich das ABS oder ABS$_{plus}$, übernimmt diese Funktion der Koordination als dem GMR-Regler direkt untergeordnete Basisfunktion (strichlierte Darstellung in der Zeichnung).

Wie die Zeichnung zeigt, berechnet der GMR-Regler ein zusätzliches Giermoment (Δ M) und zusätzliche resultierende Längs- und/oder Seitenkräfte (Δ F$_L$, Δ F$_S$) und greift in die Regelung des unterlagerten Antiblockiersystems oder des ABS$_{plus}$ dann ein, wenn die momentan vorliegenden Längsund/oder Seitenkräfte und/oder die Gierwinkelgeschwindigkeit des Fahrzeugs außerhalb von zulässigen Grenzwerten liegen. Die Grenzwerte wiederum hängen ab von dem Fahrzustand und der Fahrsituation des Fahrzeugs. Der GMR-Regler wertet diese Größen (Δ F$_L$, Δ F$_S$, Δ M) als Korrekturwerte für die von den untergeordneten Systemen oder Basisfunktionen errechneten und ggf. erzeugten Giermomente, Längs- und/oder Seitenkräfte aus. Die Berechnung von Δ F$_L$, Δ F$_S$, Δ M erfolgt nach der Beziehung

$$\begin{bmatrix} \Delta F_L \\ \Delta F_S \\ \Delta M \end{bmatrix} = f\left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}$$

oder auf Basis der Giergeschwindigkeitsabweichung von der für die aktuelle Fahrsituation vordefinierten Soll-Gierwinkelgeschwindigkeit und der Abweichung des geschätzten Fahrzeugschwimmwinkels. Während nach der Beziehung

$$\begin{bmatrix} \Delta F_L \\ \Delta F_S \\ \Delta M \end{bmatrix} = f\left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}$$

mit

$\beta_{soll}$ = Soll-Schwimmwinkel

$\beta_{ist}$ = Ist-Schwimmwinkel

$\dot{\psi}_{soll}$ = Soll-Gierwinkelgeschwindigkeit

$\dot{\psi}_{ist}$ = Ist-Gierwinkelgeschwindigkeit

$a$ = Querbeschleunigung

$\lambda$ = Schlupfwerte $\{\lambda=[\lambda_{VL}, \lambda_{VR}, \lambda_{HL}, \lambda_{HR}]\}$

$v_x$ = Fahrzeug-Längsgeschwindigkeit

$v_y$ = Fahrzeug-Quergeschwindigkeit

$\mu$ = Reibwert $\{ \mu = [ \mu_{VL}, \mu_{VR}, \mu_{HL}, \mu_{HR} ]\}$

$\alpha$ = Schräglaufwinkel $\{\alpha = [ \alpha_{VL}, \alpha_{VR}, \alpha_{HL}, \alpha_{HR} ] \}$

$F_{L/Ist}$ = berechnete oder gemessene Ist-Reifenlängskräfte $\{F_L = [F_{L,VL}, F_{L,VR}, F_{L,HL}, F_{L,HR}]\}$

$F_{S/Ist}$ = berechnete oder gemessene Ist-Reifenseitenkräfte $\{F_S = [ F_{S,VL}, F_{S,VR}, F_{S,HL}, F_{S,HR}]\}$

$F_{L/Soll,Basis}$ = vom Basiskoordinator (ABS oder ABSplus-Regler) berechnete Soll-Reifenlängskräfte

$F_{S/Soll,Basis}$ = vom Basiskoordinator (ABS oder ABSplus-Regler) berechnete Soll-Seitenkräfte

$M_{Soll,Basis}$ = vom Basiskoordinator (ABS oder ABSplus-Regler)berechnetes Soll-Giermoment

eine direkte Berechnung des zusätzlichen Giermoments ($\Delta M$) und/oder der zusätzlichen resultierenden Längs- und/ oder Seitenkräfte ($\Delta F_L$, $\Delta F_S$) erfolgt, wird nach der zweiten Methode die Berechnung der Längs- und/oder Seitenkräfte über das Giermoment und die Fahrzeugschwimmwinkelabweichung berechnet. Die so berechneten Größen werden für die Bestimmung der Soll-Werte $M_{Soll}$ (Soll- Giermoment), $F_{L,Soll}$ (Soll-Längskraft) und $F_{S,Soll}$ (Soll-Seitenkraft) verwendet. Die Soll-Werte für das zusätzliche Giermoment, die Längskraft und/oder Seitenkraft stellen die endgültigen Größen für die Fahrzeugaktuatoren dar. Als Fahrzeugaktuatoren können Druckregler, Kraftregler oder Motormomentregler etc. eingesetzt werden.

Dieser GMR-Regler ermittelt somit in seinem Beobachterteil 21 unter Berücksichtigung der geschätzten Reibwerte zwischen den Reifen und der Fahrbahn den vom Fahrer vorgegebenen Fahrzeugkurs in Form von einer Soll-Gierwinkelgeschwindigkeit d ($\psi_{Soll}$) / dt und vom Soll-Fahrzeugschwimmwinkel $\beta_{Soll}$ und berechnet das zusätzliche Giermoment ($\Delta M$) und die zusätzlichen resultierenden Längs-und Seitenkräfte ($\Delta F_L$, $\Delta F_S$). Mit Hilfe der berechneten Längs- und Seitenkräfte und/oder des Giermoments werden die Regelgrößen im untergeordneten Antiblockiersystem (ABS oder ABS$_{plus}$) dahingehend korrigiert, daß Sollwerte nach der Beziehung

$$\begin{bmatrix} F_{L,Soll} \\ F_{S,Soll} \\ M_{Soll} \end{bmatrix} = \begin{bmatrix} F_{L/Soll,Basis} \\ F_{S/Soll,Basis} \\ M_{Soll,Basis} \end{bmatrix} + \begin{bmatrix} \Delta F_L \\ \Delta F_S \\ \Delta M \end{bmatrix}$$

gebildet werden, über die die Geschwindigkeit in Längs- und Querrichtung des Fahrzeugs beeinflusst wird. Dabei wird anhand einer Bewertung der zusätzlichen Längs- und/oder Seitenkräfte ($\Delta F_L$, $\Delta F_S$) während einer Kurvenfahrt eine Veränderung der Längskraft auf der Basis des für die aktuelle Fahrsituation geschätzten Reibwertes unter Beurteilung der aktuellen Geschwindigkeit in Längsund/oder Querrichtung und unter Berücksichtigung der Eingaben des Fahrers vorgegeben und über den Koordinator des Antiblockiersystems oder der Intermodul-Kommunikation die Fahrzeugaktuatoren geregelt. Dadurch wird das Fahrverhalten eines Kraftfahrzeugs bei kritischer Haftung der Fahrzeugräder auf der Fahrbahn über die Verringerung der Geschwindigkeit am Beginn der Kurvenfahrt oder während einer Kurvenfahrt so weit verringert, dass ein Giermoment oder Zusatzdrehmoment von dem Beobachter des ESP-Reglers nicht ermittelt wird und somit eine kritische Fahrsituation für den Fahrer vermieden wird. Bei einer hohen Querdynamik und ermittelten zusätzlichen Giermoment führt die zusätzliche Regelung der Längskraft, die zur Festlegung von Druckgrößen oder zur Veränderung des Motormoments dient, zu einer Reduzierung der Querdynamik über eine Verringerung der Geschwindigkeit in Längsrichtung durch Hinführung der Ist-Längsgeschwindigkeit zur Soll-Längsgeschwindigkeit. Der Spurverlauf des Fahrzeugs wird bei gleichzeitigem Wirksamwerden des Giermoments bzw. Zusatzdrehmoments um die Hochachse des Fahrzeugs an den Spurverlauf des Fahrzeugs angenähert bzw. zu ihm hingeführt, der möglich wäre, bei griffiger Fahrbahn mit hohem Haftreibwert. Die vorgenommene Bremsregelung vor oder während der Giermomentenregelung regelt die Bremskräfte der Vorderradbremsen gemeinsam oder einzeln auf der Grundlage der Soll-Werte der im GMR-Regler ermittelten Längskräfte, wobei die einseitig wirkenden Bremskräfte, die das zusätzliche Giermoment oder Zusatzdrehmoment des Fahrzeugs um die Hochachse bewirken, den die Geschwindigkeit in Längsrichtung veränderten Bremskräften aufgeschaltet wird. Das zusätzliche Giermoment kann durch Druckabbau oder Druckaufbau an den einzelnen Rädern in Abhängigkeit von dem "untersteuernden" oder "übersteuernden" Fahrverhalten erzeugt werden.

**Patentansprüche**

1. ESP- Regler für Kraftfahrzeuge, mit hierarchisch organisierten Basisfunktionen, die mindestens einen Fahrzeugdynamikregler (GMR) und ein Antiblockier-system (ABS oder ABSplus) umfassen und der weitere Basisfunktionen oder Systeme, wie ASR, MSR, EBV, ICC, BA etc., aufweisen kann, wobei der Fahrzeugdynamikregler (GMR-Regler) den übrigen Basisfunktionen oder Systemen übergeordnet ist und ein zusätzliches Giermoment (AM)berechnet, **dadurch gekennzeichnet, daß** der Fahrzeugdynamikregler (GMR-Regler) zusätzliche resultierende ($\Delta$ F$_L$, $\Delta$ F$_S$) oder radindividuelle ($\Delta$ F$_{L1}$, $\Delta$ F$_{S1}$ bis $\Delta$ F$_{L4}$, $\Delta$ F$_{S4}$) Längs- und/oder Seitenkräfte berechnet und daß diese Größen ($\Delta$ M, $\Delta$ F$_L$, $\Delta$ F$_S$) als Korrekturwerte für die von den untergeordneten Systemen oder Basisfunktionen errechneten und ggf.erzeugten Giermomente (M$_{Soll,Basis}$), Längs- und /oder Seitenkräfte (F$_{L,Soll,Basis}$, F$_{S,Soll,Basis}$ ) ausgewertet werden.

2. ESP-Regler nach Anspruch 1, **dadurch gekennzeichnet, daß** der Fahrzeugdynamikregler (GMR-Regler) das zusätzliches Giermoment ($\Delta$ M) und/oder die zusätzlichen resultierenden oder radindividuellen Längs- und/oder Seitenkräfte ($\Delta$ F$_L$, $\Delta$ F$_S$) auf Basis der Giergeschwindigkeitsabweichung von der für die aktuelle Fahrsituation vordefinierten Soll-Gierwinkelgeschwindigkeit und der Abweichung des geschätzten Fahrzeugschwimmwinkels berechnet und für die Bestimmung der Sollwerte M$_{Soll}$, F$_{L,Soll}$ und F$_{S,Soll}$ nach

$$
\begin{bmatrix} F_{L,Soll} \\ F_{S,Soll} \\ M_{Soll} \end{bmatrix} = \begin{bmatrix} F_{L/Soll,Basis} \\ F_{S/Soll,Basis} \\ M_{Soll,Basis} \end{bmatrix} + \begin{bmatrix} \Delta F_L \\ \Delta F_S \\ \Delta M \end{bmatrix}
$$

verwendet, wobei M$_{Soll}$, F$_{L,Soll}$ und F$_{S,Soll}$ die Sollwerte für die Fahrzeugaktuatoren darstellen.

3. ESP-Regler nach Anspruch 1, **dadurch gekennzeichnet, daß** der Fahrzeugdynamikregler (GMR-Regler) das zusätzliche Giermoment ($\Delta$ M) und/oder die zusätzlichen Längs- und/oder Seitenkräfte ($\Delta$ F$_L$, $\Delta$ F$_S$) nach der Beziehung

$$
\begin{bmatrix} \Delta F_L \\ \Delta F_S \\ \Delta M \end{bmatrix} = f \left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}
$$

mit

$\beta_{soll}$ = Soll-Schwimmwinkel
$\beta_{ist}$ = Ist-Schwimmwinkel
$\dot{\psi}_{soll}$ = Soll-Gierwinkelgeschwindigkeit
$\dot{\psi}_{ist}$ = Ist-Gierwinkelgeschwindigkeit
$a$ = Querbeschleunigung
$\lambda$ = Schlupfwerte { $\lambda$ = [ $\lambda_{VL}$ , $\lambda_{VR}$ , $\lambda_{HL}$ , $\lambda_{HR}$ ]}
$v_x$ = Fahrzeug-Längsgeschwindigkeit
$v_y$ = Fahrzeug-Quergeschwindigkeit
$\mu$ = Reibwert { $\mu$ = [ $\mu_{VL}$ , $\mu_{VR}$ , $\mu_{HL}$ , $\mu_{HR}$ ]}
$\alpha$ = Schräglaufwinkel { $\alpha$ = [ $\alpha_{VL}$ , $\alpha_{VR}$ , $\alpha_{HL}$ , $\alpha_{HR}$ ]}
$F_{L/Ist}$ = berechnete oder gemessene Ist-Reifenlängskräfte {$F_L$ = [$F_{L,VL}$,$F_{L,VR}$,$F_{L,HL}$,$F_{L,HR}$]}
$F_{S/Ist}$ = berechnete oder gemessene Ist-Reifenseitenkräfte {$F_S$ = [($F_{S,VL}$,$F_{S,VR}$, $F_{S,HL}$ , $F_{S,HR}$ ]}

$F_{L/Soll,Basis}$ = vom Basiskoordinator (ABS oder ABSplus-Regler berechnete Soll-Reifenlängskräfte
$F_{S/Soll,Basis}$ = vom Basiskoordinator (ABS oder ABSplus-Regler berechnete Soll-Seitenkräfte
$M_{Soll,Basis}$ = vom Basiskoordinator (ABS oder ABSplus-Regler) berechnetes Soll-Giermoment

berechnet und für die Bestimmung der Sollwerte $M_{Soll}$, $F_{L,Soll}$ und $F_{S,Soll}$ nach

$$
\begin{bmatrix} F_{L,Soll} \\ F_{S,Soll} \\ M_{Soll} \end{bmatrix} = \begin{bmatrix} \Delta F_{L/Soll,Basis} \\ \Delta F_{S/Soll,Basis} \\ \Delta M_{Soll,Basis} \end{bmatrix} + \begin{bmatrix} \Delta F_L \\ \Delta F_S \\ \Delta M \end{bmatrix}
$$

verwendet, wobei $M_{Soll}$, $F_{L,Soll}$ und $F_{S,Soll}$ die Sollwerte für die Fahrzeugaktuatoren darstellen.

4. ESP-Regler nach einem oder mehreren der Ansprüche 1 bis 3 **dadurch gekennzeichnet, daß** die Fahrzeugaktuatoren einen Druckregler und/oder Kraftregler und/oder Motormomentregler umfassen.

5. ESP-Regler nach einem oder mehreren der Ansprüche 1 bis 4 **dadurch gekennzeichnet, daß** dieser als untergeordnete Systeme oder Funktionen zumindest ein ABS oder ABSplus und ein ASR umfaßt und daß eine Bremsdruckregelung vorrangig von dem ABS oder ABSplus bestimmt und erforderlichenfalls von dem ASR und/oder von anderen untergeordneten Systemen korrigiert wird.

6. ESP-Regler nach einem oder mehreren der Ansprüche 1 bis 4, **dadurch gekennzeichnet, daß** dieser als untergeordnete Systeme oder Funktionen zumindest ein ABS oder ABSplus und ein ASR umfaßt und daß ein Eingriff in die Antriebsmotorsteuerung vorrangig von dem ASR bestimmt und erforderlichenfalls von dem ABS oder ABSplus und /oder von den anderen untergeordneten Funktionen bzw. Systemen korrigiert wird.

7. ESP-Regler nach einem der Ansprüche 1 oder 6, **dadurch gekennzeichnet, daß** den Basisfunktionen oder Systemen eine Vorrichtung zum Ersetzen eines fehlerhaften Sensorsignals zugeordnet ist, die Mittel zum Überprüfen eines Sensorsignals auf Richtigkeit, Mittel zum Erkennen eines fehlerhaften Sensorsignals, Mittel zum Bilden eines Ersatzsignals aus dem Ausgangssignal eines oder mehrerer anderer Sensoren und Umschaltmittel zum Verbinden der Vorrichtung mit den Basisfunktionen oder Systemen aufweist.

8. Fahrdynamikregelung, insbesondere mit einem ESP-Regler nach einem oder mehreren der Ansprüche 1 bis 7, die mindestens einen Fahrzeugdynamikregler (GMR), in dem mindestens ein zusätzliches Giermoment ($\Delta M$) berechnet wird und ein Antiblockiersystem (ABS oder ABSplus) aufweist **dadurch gekennzeichnet, daß** in dem Fahrzeugdynamikregler (GMR-Regler) zusätzliche resultierende oder radindividuelle Längs- und/oder Seitenkräfte ($\Delta F_L$, $\Delta F_S$) nach der Beziehung

$$
\begin{bmatrix} \Delta F_L \\ \Delta F_S \\ \Delta M \end{bmatrix} = f\left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}
$$

mit

$\beta_{soll}$ = Soll-Schwimmwinkel
$\beta_{ist}$ = Ist-Schwimmwinkel
$\dot{\psi}_{soll}$ = Soll-Gierwinkelgeschwindigkeit
$\dot{\psi}_{ist}$ = Ist-Gierwinkelgeschwindigkeit
$a$ = Querbeschleunigung
$\lambda$ = Schlupfwerte { $\lambda = [\lambda_{VL}, \lambda_{VR}, \lambda_{HL}, \lambda_{HR}]$ }

$\nu_x$ = Fahrzeug-Längsgeschwindigkeit

$\nu_y$ = Fahrzeug-Quergeschwindigkeit

$\mu$ = Reibwert { $\mu$ = [ $\mu_{VL}$ , $\mu_{VR}$ , $\mu_{HL}$ , $\mu_{HR}$ ]}

$\alpha$ = Schräglaufwinkel { $\alpha$ = [ $\alpha_{VL}$ , $\alpha_{VR}$ , $\alpha_{HL}$ , $\alpha_{HR}$ ]}

$F_{L/Ist}$ = berechnete oder gemessene Ist-Reifenlängskräfte {$F_L$ = [$F_{L,VL}$ , $F_{L,VR}$ , $F_{L,HL}$ , $F_{L,HR}$]}

$F_{S/Ist}$ = berechnete oder gemessene Ist-Reifenseitenkräfte {$F_S$ = [$F_{S,VL}$ , $F_{S,VR}$ , $F_{S,HL}$ , $F_{S,HR}$]}

$F_{L/Soll,Basis}$ = vom Basiskoordinator (ABS oder ABSplus-Regler) berechnete Soll-Reifenlängskräfte

$F_{S/Soll,Basis}$ = vom Basiskoordinator (ABS oder ABSplus-Regler) berechnete Soll-Seitenkräfte

$M_{Soll,Basis}$ = vom Basiskoordinator (ABS oder ABSplus-Regler) berechnetes Soll-Giermoment

berechnet werden und daß mit Hilfe dieser berechneten Längs- und/oder Seitenkräfte ($\Delta F_L$, $\Delta F_S$) und/oder des Giermoments ($\Delta M$) eine die Geschwindigkeit in Längsund/oder Querrichtung des Kraftfahrzeugs beeinflussende Längs- bzw. Seitenkraft ($F_{L,Soll}$, $F_{S,Soll}$) und/oder ein Giermoment ($M_{Soll}$) für die Einstellung der Fahrzeugaktuatoren bestimmt wird.

9. Fahrdynamikregelung nach Anspruche 8, **dadurch gekennzeichnet, daß** in dem Fahrzeugdynamikregler (GMR-Regler) anhand einer Bewertung der zusätzlichen Längs-und Seitenkräfte ($\Delta F_L$ und/oder $\Delta F_S$) während einer Kurvenfahrt eine Veränderung der Längskraft auf der Basis des für die aktuelle Fahrsituation geschätzten Reibwertes und der Beurteilung der aktuellen Geschwindigkeit in Längs- und/oder Querrichtung unter Berücksichtigung der Eingaben des Fahrers über die Fahrzeugaktuatoren vorgenommen wird.

10. Fahrdynamikregelung nach Anspruch 8 oder 9, **dadurch gekennzeichnet, daß** das zusätzliche Giermoment ( $\Delta M$) und die zusätzliche Längskraft ($\Delta F_L$) zur Festlegung von Druckgrößen und/oder des Motormoments dienen, die über die Bremsdruckregelung ein Zusatzgiermoment und/oder eine Verringerung der Geschwindigkeit in Längsrichtung erzeugen, welche die Ist-Gierwinkelgeschwindigkeit zur Soll-Gierwinkelgeschwindigkeit und/oder die Ist-Längsgeschwindigkeit zur Soll-Längsgeschwindigkeit hinführen.

11. Fahrdynamikregelung nach einem der Ansprüche 8 bis 10, **dadurch gekennzeichnet, daß** die Verringerung der Ist-Längsgeschwindigkeit durch eine gemeinsame Bremsdruckregelung der Vorderradbremsen erfolgt.

**Claims**

1. ESP controller for automotive vehicles with hierarchically organized basic functions which comprise at least one vehicle dynamics controller (YTC) and one anti-lock system (ABS or ABSplus), and the ESP controller may comprise further basic functions or systems, such as TCS, EDC (engine drag control), EBD, ICC, BA, etc., wherein the vehicle dynamics controller (YTC controller) is superordinate in relation to the other basic functions or systems and calculates an additional yaw torque ($\Delta M$),
   **characterized in that** the vehicle dynamics controller (YTC controller) calculates additional resultant ($\Delta F_L$, $\Delta F_S$) longitudinal and/or lateral forces or longitudinal and/or lateral forces ($\Delta F_{L1}$, $\Delta F_{S1}$ to $\Delta F_{L4}$, $\Delta F_{S4}$) on each individual wheel, and **in that** these quantities ($\Delta M$, $\Delta F_L$, $\Delta F_S$) are evaluated as correction values for the yaw torques ($M_{soll,Basis}$), longitudinal and/or lateral forces ($F_{L,Soll,Basis}$, $F_{S,Soll,Basis}$) which are calculated or generated by the subordinate systems or basic functions.

2. ESP controller as claimed in claim 1,
   **characterized in that** the vehicle dynamics controller (YTC controller) calculates the additional yaw torque ($\Delta M$) and/or the additional resultant or wheel-individual longitudinal and/or lateral forces ($\Delta F_L$, $\Delta F_S$) on the basis of the yaw rate deviation from the nominal yaw rate predefined for the current driving situation and the deviation of the estimated vehicle sideslip angle and uses the quantities for the determination of the nominal values $M_{soll}$, $F_{L,Soll}$ and $F_{S,Soll}$ according to

$$\begin{bmatrix} F_{L,Soll} \\ F_{S,Soll} \\ M_{Soll} \end{bmatrix} = \begin{bmatrix} F_{L/Soll,Basis} \\ F_{S/Soll,Basis} \\ M_{Soll,Basis} \end{bmatrix} + \begin{bmatrix} \Delta F_L \\ \Delta F_S \\ \Delta M \end{bmatrix}$$

wherein $M_{Soll}$, $F_{L,Soll}$ and $F_{S,Soll}$ represent the nominal values for the vehicle actuators.

3. ESP controller as claimed in claim 1,
   **characterized in that** the vehicle dynamics controller (YTC controller) calculates the additional yaw torque ($\Delta$ M) and/or the additional longitudinal and/or lateral forces ($\Delta$ $F_L$, $\Delta$ $F_S$) according to the relation

$$\begin{bmatrix} \Delta F_L \\ \Delta F_S \\ \Delta M \end{bmatrix} = f\left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}$$

wherein

$\beta_{soll}$ = nominal sideslip angle
$\beta_{ist}$ = actual sideslip angle
$\dot{\psi}_{soll}$ = nominal yaw rate
$\dot{\psi}_{ist}$ = actual yaw rate
$a$ = transverse acceleration
$\lambda$ = slip values { $\lambda = [ \lambda_{VL}, \lambda_{VR}, \lambda_{HL}, \lambda_{HR} ]$}
$v_x$ = vehicle longitudinal speed
$v_y$ = vehicle transverse speed
$\mu$ = coefficient of friction { $\mu = [ \mu_{VL}, \mu_{VR}, \mu_{HL}, \mu_{HR} ]$}
$\alpha$ = tire slip angle {$\alpha = [\alpha_{VL}, \alpha_{VR}, \alpha_{HL}, \alpha_{HR} ]$}
$F_{L/Ist}$ = calculated or measured actual tire longitudinal forces { $F_L = [ F_{L,VL}, F_{L,VR}, F_{L,HL}, F_{L,HR} ]$}
$F_{S/Ist}$ = calculated or measured actual tire lateral forces { $F_S = [ F_{S,VL}, F_{S,VR}, F_{S,HL}, F_{S,HR} ]$}
$F_{L/Soll,Basis}$ = nominal tire longitudinal forces calculated by the basis coordinator (ABS or ABSplus controller)
$F_{S/Soll,Basis}$ = nominal lateral forces calculated by the basis coordinator (ABS or ABSplus controller)
$M_{Soll,Basis}$ = nominal yaw torque calculated by the basis coordinator (ABS or ABSplus controller)

and uses the calculated results for determining the nominal values $M_{soll}$, $F_{L,Soll}$ and $F_{S,Soll}$ according to

$$\begin{bmatrix} F_{L,Soll} \\ F_{S,Soll} \\ M_{Soll} \end{bmatrix} = \begin{bmatrix} F_{L/Soll,Basis} \\ F_{S/Soll,Basis} \\ M_{Soll,Basis} \end{bmatrix} + \begin{bmatrix} \Delta F_L \\ \Delta F_S \\ \Delta M \end{bmatrix}$$

wherein $M_{Soll}$, $F_{L,Soll}$ and $F_{S,Soll}$ represent the nominal values for the vehicle actuators.

4. ESP controller as claimed in any one or more of claims 1 to 3,
   **characterized in that** the vehicle actuators comprise a pressure controller and/or a force controller and/or an engine torque controller.

5. ESP controller as claimed in any one or more of claims 1 to 4,
   **characterized in that** the ESP controller includes at least one ABS or ABSplus and one TCS system as subordinate systems or functions, and **in that** brake pressure control is determined predominantly by the ABS or ABSplus and, if necessary, corrected by the TCS and/or other subordinate systems.

6. ESP controller as claimed in any one or more of claims 1 to 4,
   **characterized in that** the ESP controller includes at least one ABS or ABSplus and one TCS system as subordinate systems or functions, and **in that** an intervention in drive engine control is determined in the ESP controller predominantly by the TCS and, if necessary, corrected by the ABS or ABSplus and/or by the other subordinate functions or systems.

**7.** ESP controller as claimed in any one of claims 1 or 6,
**characterized in that** associated with the basic functions or systems is a device for replacing an incorrect sensor signal which includes means for checking the correctness of a sensor signal, means for detecting an incorrect sensor signal, means for producing a replacement signal from the output signal of one or more other sensors and change-over means for connecting the device to the basic functions or systems.

**8.** Driving dynamics control, especially with an ESP controller as claimed in any one or more of claims 1 to 7, which includes at least one vehicle dynamics controller (YTC), wherein at least one additional yaw torque ($\Delta M$) is calculated, and an anti-lock system (ABS or ABSplus),
**characterized in that** in the vehicle dynamics controller (YTC controller) additional resultant or wheel-individual longitudinal and/or lateral forces ($\Delta F_L$, $\Delta F_S$) are calculated according to the relation

$$\begin{bmatrix} \Delta F_L \\ \Delta F_S \\ \Delta M \end{bmatrix} = f\left\{ \beta_{soll}, \beta_{ist}, \dot{\psi}_{soll}, \dot{\psi}_{ist}, a, \lambda, v_x, v_y, \mu, \alpha, F_{L/Ist}, F_{S/Ist}, F_{L/Soll,Basis}, F_{S/Soll,Basis}, M_{Soll,Basis} \right\}$$

wherein

$\beta_{soll}$ = nominal sideslip angle
$\beta_{ist}$ = actual sideslip angle
$\dot{\psi}_{soll}$ = nominal yaw rate
$\dot{\psi}_{ist}$ = actual yaw rate
$a$ = transverse acceleration
$\lambda$ = slip values { $\lambda = [\lambda_{VL}, \lambda_{VR}, \lambda_{HL}, \lambda_{HR}]$}
$v_x$ = vehicle longitudinal speed
$v_y$ = vehicle transverse speed
$\mu$ = coefficient of friction { $\mu = [\mu_{VL}, \mu_{VR}, \mu_{HL}, \mu_{HR}]$}
$\alpha$ = tire slip angle { $\alpha = [\alpha_{VL}, \alpha_{VR}, \alpha_{HL}, \alpha_{HR}]$}
$F_{L/Ist}$ = calculated or measured actual tire longitudinal forces { $F_L = [F_{L,VL}, F_{L,VR}, F_{L,HL}, F_{L,HR}]$}
$F_{S/Ist}$ = calculated or measured actual tire lateral forces { $F_S = [F_{S,VL}, F_{S,VR}, F_{S,HL}, F_{S,HR}]$}
$F_{L/Soll,Basis}$ = nominal tire longitudinal forces calculated by the basis coordinator (ABS or ABSplus controller)
$F_{S/Soll,Basis}$ = nominal lateral forces calculated by the basis coordinator (ABS or ABSplus controller)
$M_{Soll,Basis}$ = nominal yaw torque calculated by the basis coordinator (ABS or ABSplus controller)

and **in that** a longitudinal or lateral force ($F_{L,Soll}$, $F_{S,Soll}$) which influences the speed in the longitudinal and/or transverse directions of the automotive vehicle and/or an additional yaw torque ($M_{soll}$) for the adjustment of the vehicle actuators is determined by means of these calculated longitudinal and/or lateral forces ($\Delta F_L$, $\Delta F_S$) and/or the yaw torque ($\Delta M$).

**9.** Driving dynamics control as claimed in claim 8,
**characterized in that** a change in the longitudinal force on the basis of the coefficient of friction estimated for the current driving situation and the judgment of the current speed in longitudinal and/or transverse directions is performed by way of an evaluation of the additional longitudinal and/or lateral forces ($\Delta F_L$, $\Delta F_S$) during a cornering maneuver in consideration of the inputs of the driver by way of the vehicle actuators.

**10.** Driving dynamics control as claimed in claim 8 or claim 9,
**characterized in that** the additional yaw torque ($\Delta M$) and the additional longitudinal force ($\Delta F_L$) is used to fix pressure quantities and/or the engine torque, which produce an additional yaw torque and/or a reduction of the speed in a longitudinal direction by way of brake pressure control, thereby adapting the actual yaw rate to the nominal yaw rate and/or the actual longitudinal speed to the nominal longitudinal speed.

**11.** Driving dynamics control as claimed in any one of claims 8 to 10,
**characterized in that** the reduction of the actual longitudinal speed is effected by a joint brake pressure control of the front wheel brakes.

**Revendications**

1. Régulateur ESP pour véhicules automobiles, avec des fonctions de base organisées de manière hiérarchique qui comportent au moins un régulateur de dynamique de véhicule (GMR), et un système d'antiblocage (ABS ou ABSplus), et qui peut comporter d'autres fonctions de base ou systèmes tels que ASR, MSR, EBV, ICC, BA, etc., le régulateur de dynamique de véhicule (régulateur GMR) asservissant les autres fonctions de base ou systèmes et calculant un moment d'embardée supplémentaire ($\Delta M$), **caractérisé en ce que** le régulateur de dynamique de véhicule (régulateur GMR) calcule des forces longitudinales et/ou latérales supplémentaires résultantes ($\Delta F_L$, $\Delta F_S$) ou individuelles aux roues ($\Delta F_{L1}$, $\Delta F_{S1}$ jusqu'à $\Delta F_{L4}$, $\Delta F_{S4}$) et **en ce que** ces grandeurs ($\Delta M$, $\Delta F_L$, $\Delta F_S$) sont exploitées pour les moments d'embardée ($M_{Soll,Basis}$), les forces longitudinales et/ou forces latérales ($F_{L,Soll,Basis}$, $F_{S,Soll,Basis}$), calculés et éventuellement produits par les systèmes asservis ou fonctions de base.

2. Régulateur ESP selon la revendication 1, **caractérisé en ce que** le régulateur de dynamique de véhicule (régulateur GMR) calcule le moment d'embardée ($\Delta M$) supplémentaire et/ou les forces longitudinales et/ou latérales supplémentaires résultantes ou individuelles aux roues (($\Delta F_L$, $\Delta F_S$) sur la base de l'écart de vitesse d'embardée par rapport à la vitesse d'angle d'embardée de consigne prédéfinie pour la situation de conduite actuelle, et de l'écart de l'angle de flottement estimé du véhicule, et utilise pour l'évaluation des valeurs de consigne $M_{Soll}$ $F_{S,Soll}$ et $F_{S,Soll}$ selon

$$\begin{bmatrix} F_{L,\,Soll} \\ F_{S,\,Soll} \\ M_{Soll} \end{bmatrix} = \begin{bmatrix} F_{L/Soll,\,Basis} \\ F_{S/Soll,\,Basis} \\ M_{Soll,\,Basis} \end{bmatrix} + \begin{bmatrix} \Delta F_L \\ \Delta F_S \\ \Delta M \end{bmatrix}$$

$M_{Soll}$, $F_{L,Soll}$ et $F_{S,Soll}$ représentant les valeurs de consigne pour les actionneurs du véhicule.

3. Régulateur ESP selon la revendication 1 **caractérisé en ce que** le régulateur de dynamique du véhicule (régulateur GMR) calcule le moment d'embardée supplémentaire ($\Delta M$) et/ou les forces longitudinales et/ou latérales supplémentaire ($\Delta F_L$, $\Delta F_S$) suivant la relation

$$\begin{bmatrix} \Delta F_L \\ \Delta F_S \\ \Delta M \end{bmatrix} = f(\beta soll, \beta_{ist}, \psi_{soll}, \psi_{ist}, a, \lambda, v_x, v_y, \mu, \alpha, F_{LIist}, F_{SIIst}, F_{LISoll,Basis}, F_{SISoll,Basis}, M_{Soll,Basis})$$

où

$\beta_{soll}$ = angle de flottement de consigne

$\beta_{ist}$ = angle de flottement réel

$\dot{\psi}_{soll}$ = vitesse d'angle d'embardée de consigne

$\dot{\psi}_{ist}$ = vitesse d'angle d'embardée réelle

$a$ = accélération transversale

$\lambda$ = valeurs de glissement ($\lambda = [\lambda_{VR}, \lambda_{VR}, \lambda_{HL}, \lambda_{HR}]$)

$v_x$ = vitesse longitudinale du véhicule

$v_y$ = vitesse transversale du véhicule

$\mu$ = coefficient de friction ($\mu = [\mu_{VL}, \mu_{VR}, \mu_{HL}, \mu_{HR}]$)

$\alpha$ = inclinaison de l'axe-pivot ($\alpha = [\alpha_{VL}, \alpha_{VR}, \alpha_{HL}, \alpha_{HR}]$)

$F_{L/Ist}$ = forces longitudinales réelles du pneu calculées ou mesurées ($F_L$=[$F_{LVL}$, $F_{LVR}$, $F_{LHL}$, $F_{LHR}$])

$F_{S/Ist}$ = forces latérales réelles du pneu calculées ou mesurées ($F_S$=[$F_{SVL}$, $F_{SVR}$, $F_{SHL}$, $F_{SHR}$])

$F_{L/Soll,Basis}$ = forces longitudinales de consigne du pneu calculées par le coordinateur de base (régulateur ABS ou ABSplus)

$F_{S/Soll,Basis}$ = forces latérales de consigne du pneu calculées par le coordinateur de base (régulateur ABS ou ABSplus)

$M_{Soll,Basis}$ = moment d'embardée de consigne calculé par le coordinateur de base (régulateur ABS ou ABSplus)

et les utilise pour déterminer les valeurs de consigne $M_{Soll}$, $F_{L,Soll}$ et $F_{S,Soll}$ selon

$$\begin{bmatrix} F_{L,\,Soll} \\ F_{S,\,Soll} \\ M_{Soll} \end{bmatrix} = \begin{bmatrix} F_{L/Soll,\,Basis} \\ F_{S/Soll,\,Basis} \\ M_{Soll,\,Basis} \end{bmatrix} + \begin{bmatrix} \Delta F_L \\ \Delta F_S \\ \Delta M \end{bmatrix}$$

$M_{Soll}$, $F_{L,Soll}$ et $F_{S,Soll}$ représentant les valeurs de consigne pour les actionneurs du véhicule.

4. Régulateur ESP selon une ou plusieurs des revendications 1 à 3, **caractérisé en ce que** les actionneurs du véhicule comprennent un régulateur de pression et/ou régulateur de forces et/ou régulateur du couple moteur.

5. Régulateur ESP selon une ou plusieurs des revendications 1 à 4, **caractérisé en ce que** celui-ci comprend comme systèmes ou fonctions asservis au moins un ABS ou ABSplus et un ASR, et **en ce qu'**une régulation de la pression de freinage est déterminée en priorité par l'ABS ou l'ABSplus et, si nécessaire, est corrigée par l'ASR et/ou d'autres systèmes asservis.

6. Régulateur ESP selon une ou plusieurs des revendications 1 à 4, **caractérisé en ce que** celui-ci comprend comme systèmes ou fonctions asservis au moins un ABS ou ABSplus et un ASR, et **en ce qu'**une intervention dans la commande du moteur d'entraînement est déterminée en priorité par l'ASR et, si nécessaire, est corrigée par l'ABS ou l'ABSplus et/ou par les autres fonctions ou systèmes asservis.

7. Régulateur ESP selon l'une des revendications 1 ou 6, **caractérisé en ce qu'**aux fonctions de base ou systèmes est affecté un dispositif pour remplacer un signal défectueux de capteur, qui comporte des moyens pour vérifier l'exactitude d'un signal de capteur, des moyens pour reconnaître un signal de capteur défectueux, des moyens pour former un signal de remplacement à partir du signal de sortie d'un ou de plusieurs autres capteurs et des moyens de commutation pour relier le dispositif aux fonctions de base ou systèmes.

8. Régulation dynamique de marche, en particulier avec un régulateur ESP selon une ou plusieurs des revendications 1 à 7, qui comporte au moins un régulateur de dynamique de véhicule (GMR) dans lequel est calculé au moins un moment d'embardée ($\Delta M$) supplémentaire ainsi qu'un système d'antiblocage (ABS ou ABSplus), **caractérisée en ce que** dans le régulateur de dynamique de véhicule (régulateur GMR) sont calculées des forces longitudinales et/ou latérales ($\Delta F_L$, $\Delta F_S$) supplémentaires résultantes ou individuelles aux roues selon la relation

$$\begin{bmatrix} \Delta F_L \\ \Delta F_S \\ \Delta M \end{bmatrix} = f(\beta_{soll}, \beta_{ist}, \psi_{soll}, \psi_{ist}, a, \lambda, v_x, v_y, \mu, \alpha, F_{L/Ist}, F_{S/Ist}, F_{L/Soll,Basis}, F_{S/Soll,Basis}, M_{Soll,Basis})$$

où

$\beta_{soll}$ = angle de flottement de consigne

$\beta_{ist}$ = angle de flottement réel

$\dot{\psi}_{soll}$ = vitesse d'angle d'embardée de consigne

$\dot{\psi}_{ist}$ = vitesse d'angle d'embardée réelle

$a$ = accélération transversale

$\lambda$ = valeurs de glissement $(\lambda = [\lambda_{VR}, \lambda_{VR}, \lambda_{HL}, \lambda_{HR}])$

$\nu_x$ = vitesse longitudinale du véhicule

$\nu_y$ = vitesse transversale du véhicule

$\mu$ = coefficient de friction $(\mu = [\mu_{VL}, \mu_{VR}, \mu_{HL}, \mu_{HR}])$

$\alpha$ = inclinaison de l'axe-pivot $(\alpha = [\alpha_{VL}, \alpha_{VR}, \alpha_{HL}, \alpha_{HR}])$

$F_{L/ist}$ = forces longitudinales réelles du pneu calculées ou mesurées $(F_L = [F_{LVL}, F_{LVR}, F_{LHL}, F_{LHR}])$

$F_{S/Ist}$ = forces latérales réelles du pneu calculées ou mesurées $(F_S = [F_{SVL}, F_{SVR}, F_{SHL}, F_{SHR}])$

$F_{L/Soll,Basis}$ = forces longitudinales de consigne du pneu calculées par le coordinateur de base (régulateur ABS ou ABSplus)

$F_{S/Soll,Basis}$ = forces latérales de consigne du pneu calculées par le coordinateur de base (régulateur ABS ou ABSplus)

$M_{Soll,Basis}$ = moment d'embardée de consigne calculé par le coordinateur de base (régulateur ABS ou ABSplus)

et **en ce qu'**à l'aide de ces forces longitudinales et/ou latérales ($\Delta F_L$, $\Delta F_S$) calculées et/ou du moment d'embardée ($\Delta M$), on détermine une force longitudinale ou latérale ($F_{L,Soll}$, $F_{S,Soll}$) influençant la vitesse dans la direction longitudinale et/ou transversale du véhicule automobile, pour le réglage des actionneurs du véhicule.

9. Régulation de la dynamique de marche selon la revendication 8, **caractérisée en ce que** dans le régulateur de la dynamique du véhicule (régulateur GMR) il est procédé, à l'aide d'une évaluation des forces longitudinales et latérales supplémentaires ($\Delta F_L$ et/ou $\Delta F_S$), pendant une conduite en courbe, à une variation de la force longitudinale, sur la base du coefficient de friction estimé pour la situation de conduite actuelle, et de l'appréciation de la vitesse actuelle dans la direction longitudinale et/ou la direction transversale, en tenant compte des entrées du conducteur à travers les actionneurs du véhicule.

10. Régulation de la dynamique de marche selon la revendication 8 ou 9, **caractérisée en ce que** le moment d'embardée supplémentaire ($\Delta M$) et la force longitudinale supplémentaire ($\Delta F_L$) servent à la détermination de grandeurs de pression et/ou du moment du moteur, qui créent un moment d'embardée supplémentaire par l'intermédiaire de la régulation de la pression de frein et/ou une diminution de la vitesse dans la direction longitudinale, qui amènent la vitesse d'embardée réelle vers la vitesse d'embardée de consigne et/ou la vitesse longitudinale réelle vers la vitesse longitudinale de consigne.

11. Régulation de la dynamique de marche selon l'une des revendications 8 à 10, **caractérisée en ce que** la diminution de la vitesse longitudinale réelle est effectuée par une régulation commune de la pression des freins de roue avant.